# EUROPEAN PATENT APPLICATION

(11) **EP 4 772 780 A1**
(43) Date of publication of application: **08.07.2026**
(21) Application number: 26150558.0
(22) Date of filing: 07.01.2026
(51) Int. Cl.: F16K 11/07, F16K 31/04, F16K 37/00

(54) **VALVE CONTROLLER FOR WATER SOFTENING SYSTEMS**

(30) Priority: 07.01.2025 US 202563742750 P
(71) Applicant: Pentair Residential Filtration, LLC, Brookfield, WI 53005 (US)
(72) Inventor: RUCKI, Joe, Brookfield, 53005 (US); HILL-WIEDERHOLT, Aaron, Brookfield, 53005 (US); BREWER, Blake, Brookfield, 53005 (US); DRAGT, Jorick, Brookfield, 53005 (US); STREET, Jayvin, Brookfield, 53005 (US); WALKER, Don, Brookfield, 53005 (US)
(74) Representative: Viering, Jentschura & Partner mbB Patent- und Rechtsanwälte

(57) **Abstract**

A valve controller (100) including a microcontroller (144), a motor (166), a linkage (174), an encoder disc (192), and an optical sensor (194) is provided. The motor (166) is coupled to the microcontroller (144) and includes a rotor and a rotor sensor. The rotor contains a plurality of magnets, and the rotor sensor is configured to generate an electrical pulse when a magnet of the plurality of magnets passes by the rotor sensor. The encoder disc (192) includes only a single aperture in a peripheral region and is coupled to the motor (166). The optical sensor (194) is positioned to detect the aperture along the peripheral region of the encoder disc (192) as the encoder disc (192) is rotated by the motor (166). The microcontroller (144) determines a current position of the piston based on electrical pulses generated by the rotor sensor and the detection of the aperture in the encoder disc (192).

## Description

### BACKGROUND

The groundwater supplied to homes and businesses is often tainted with metallic ions such as calcium and magnesium, resulting in water that is more difficult to use with detergents and cleaning products than mineral-free water. Water softening systems treat hard water by way of filtration. These systems routinely include a valve controller for tracking water flow through the water softener and ensuring smooth operation of the system's components, which include but are not limited to a motor, a piston, and an encoder disc. These valve controllers may also be implemented in systems with applications outside of water softening, such as in iron mitigation and filtration systems.

Successful continuous usage of water softening systems depends on the performance of the system components, but these components can become dislodged or faulty as a result of water pressure buildup. For instance, system pressure may cause the piston of an associated valve to move out of place, which could later lead to water softening system failures.

For the valve controller to accurately control water flow through the system, oscillatory movements of the piston and the motor should be precisely tracked. Accordingly, it would be useful to provide an improved valve controller that manages the movement of the motor and the piston.

### SUMMARY

Some embodiments provide a valve controller including a microcontroller, a motor coupled to the microcontroller, a linkage having a first end and a second end, an encoder disc coupled to the motor, and an optical sensor positioned to detect an aperture along a peripheral region of the encoder disc as the encoder disc is rotated by the motor. The motor includes a rotor having a plurality of magnets and a rotor sensor configured to generate an electrical pulse when a magnet of the plurality of magnets passes by the rotor sensor. The linkage is coupled to the motor by the first end and the linkage is coupled to a piston of a control valve by the second end. The encoder disc includes only a single aperture in the peripheral region. The microcontroller determines a current position of the piston based on electrical pulses generated by the rotor sensor and the detection of the aperture in the encoder disc.

In some embodiments, the motor is coupled to a gear train, the gear train is coupled to a drive crank, and the drive crank is coupled to the linkage.

In some embodiments, the control valve further includes one or more seals, and the piston selectively engages the one or more seals by way of reciprocating movement to control fluid flow through the control valve.

In some embodiments, the rotor sensor includes a first channel and a second channel that produce quadrature signals that are 90 degrees offset in phase.

In some embodiments, the microcontroller further determines an expected position of the piston based on the electrical pulses and the detection of the aperture in the encoder disc.

In some embodiments, the microcontroller is further configured to instruct the valve controller to adjust a position of the piston when the current position of the piston is different from the expected position of the piston.

In some embodiments, the microcontroller is configured to detect inadvertent movement of the piston based on a number of electrical pulses generated by the rotor sensor.

Some embodiments provide a valve controller including a microcontroller, a motor, an electrical current sensor configured to sense an electrical current value drawn by the motor, and a linkage having a first end and a second end. The linkage is coupled to the motor by the first end and the linkage is coupled to a piston of a control valve by the second end. The control valve further includes one or more seals and the piston selectively engages the one or more seals by way of reciprocating movement to control fluid flow through the control valve. The microcontroller is configured to monitor the electrical current value drawn by the motor and compare the monitored electrical current value to one or more electrical current threshold values to determine a condition of the control valve.

In some embodiments, the microcontroller determines the one or more electrical current threshold values based on one or more baseline electrical current values.

In some embodiments, the one or more baseline electrical current values includes at least a first baseline electrical current value corresponding to a first position of the piston with respect to the one or more seals and a second baseline electrical current value corresponding to a second position of the piston with respect to the one or more seals.

In some embodiments, the piston is in full contact with the one or more seals in the first position.

In some embodiments, the piston is initiating contact with the one or more seals in the first position.

In some embodiments, the piston is not in contact with any of the one or more seals in the second position.

In some embodiments, the one or more electrical current threshold values includes an upper electrical current threshold value and a lower electrical current threshold value.

In some embodiments, the upper electrical threshold value is no more than 50% greater than the first baseline electrical current value or the second baseline electrical current value and the lower electrical threshold value is no more than 50% less than the first baseline electrical current value or the second baseline electrical current value.

In some embodiments, the condition of the control valve is selected from the group consisting of proper working condition, a worn seal, or jammed debris.

In some embodiments, the microcontroller is further configured to display an alert indicating the condition of the control valve on a user interface.

Some embodiments provide a valve controller including a microcontroller, a first motor coupled to the microcontroller, a linkage having a first end and a second end, a second motor coupled to the microcontroller, a power supply coupled to the microcontroller, and a power delivery circuit configured to selectively direct power from the power supply to only one of the first motor or the second motor at a time. The linkage is coupled to the motor by the first end and the linkage is coupled to a piston of a control valve by the second end. The second motor is coupled to a bypass valve or a shutoff valve.

In some embodiments, when the microcontroller requests power to be delivered to both the first motor and the second motor simultaneously, the power delivery circuit directs power from the power supply to only one of the first motor or the second motor at a time.

In some embodiments, data of the valve controller is downloadable to a USB connected to the valve controller.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is an isometric view of a valve controller according to principles of the disclosure;
FIG. 2A is a front view of the valve controller of FIG. 1 with portions of a front housing rendered transparently;
FIG. 2B is a top view of the valve controller of FIG. 1 with portions of the front housing rendered transparently;
FIG. 2C is an exploded view of certain interior components of the valve controller of FIG. 1 with a housing removed;
FIG. 3 is a partial isometric view of a position sensing assembly of the valve controller of FIG. 1;
FIG. 4 is a front view of an encoder disc of the position sensing assembly of FIG. 3;
FIG. 5 is a schematic diagram of a rotor of a motor of the valve controller of FIG. 1;
FIG. 6A is a partial cross-sectional view of a control valve piston stack of a control valve within a water softening system, the control valve having a piston in a first position;
FIG. 6B is a partial cross-sectional view of the control valve piston stack of FIG. 6A with the piston in a second position;
FIG. 6C is a partial cross-sectional view of the control valve piston stack of FIG. 6A with the piston in a third position;
FIG. 6D is a partial cross-sectional view of the control valve piston stack of FIG. 6A with the piston in a fourth position;
FIG. 6E is a partial cross-sectional view of the control valve piston stack of FIG. 6A with the piston in a fifth position;
FIG. 6F is a partial cross-sectional view of the control valve piston stack of FIG. 6A with the piston in a sixth position;
FIG. 7 is a graph depicting a relationship between piston travel of the piston stack of FIG. 6A and electric current drawn by the motor of the valve controller of FIG. 1;
FIG. 8A is a front view of the valve controller of FIG. 1 with a user interface panel removed;
FIG. 8B is a back view of the user interface panel of the valve controller of FIG. 1;
FIG. 8C is a partial cross-sectional view of the valve controller of FIG. 1 cut along line A-A of FIG. 1;
FIG. 9 is a back view of the valve controller of FIG. 1;
FIG. 10 is a cross-sectional view of the valve controller of FIG. 1 cut along line B-B of FIG. 1; and
FIG. 11 is a partial back view of the valve controller of FIG. 1 with an electronics cover removed.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to the embodiments shown but are to be accorded the widest scope consistent with the principles and features disclosed herein. The figures, which are not necessarily to scale, depict selected embodiments and are not intended to limit the scope of embodiments of the invention. Skilled artisans will recognize that the examples provided herein have many useful alternatives that fall within the scope of embodiments of the invention.

It is to be understood that the phraseology and terminology used herein are for the purpose of description and should not be regarded as limiting. For example, the use of "including," "comprising," or "having" and variations thereof herein is meant to encompass the items listed thereafter and equivalents thereof, as well as additional items. As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases, can include single or multiple instances of A, B, and/or C, and, in the case that any of A, B, and/or C indicates a category of elements, single or multiple instances of any of the elements of the categories A, B, and/or C.

As explained above, it would be useful to provide improved systems to track piston movement and position within a control valve for a water softener. More particularly, according to the teachings herein, improved systems are disclosed that (1) utilize a single aperture encoder disc within a position sensing assembly of a valve controller, (2) implement quadrature pulse counting to track piston position, and/or (3) track electric current drawn by a motor of the valve controller to detect seal engagement in the water softener valve, among other functions.

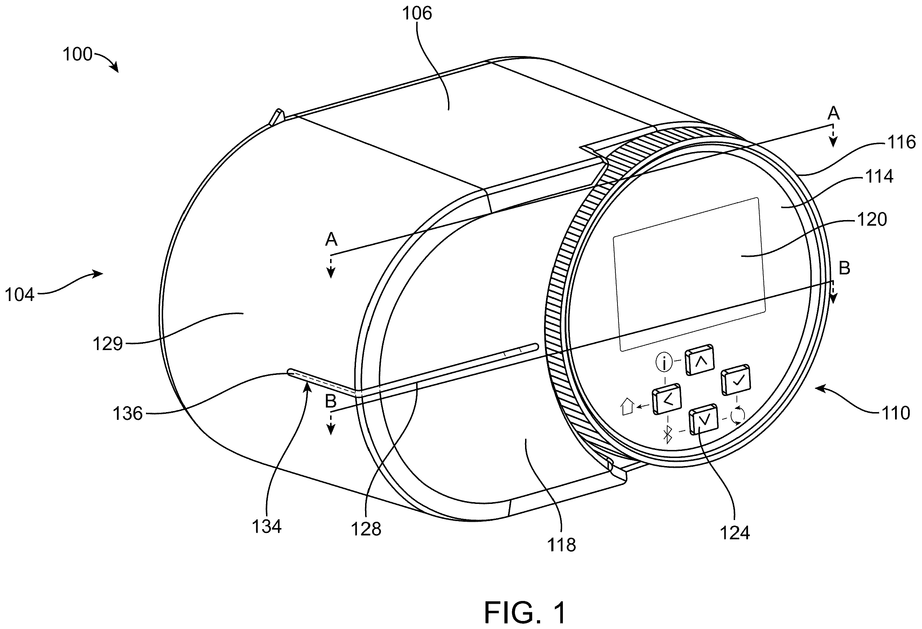

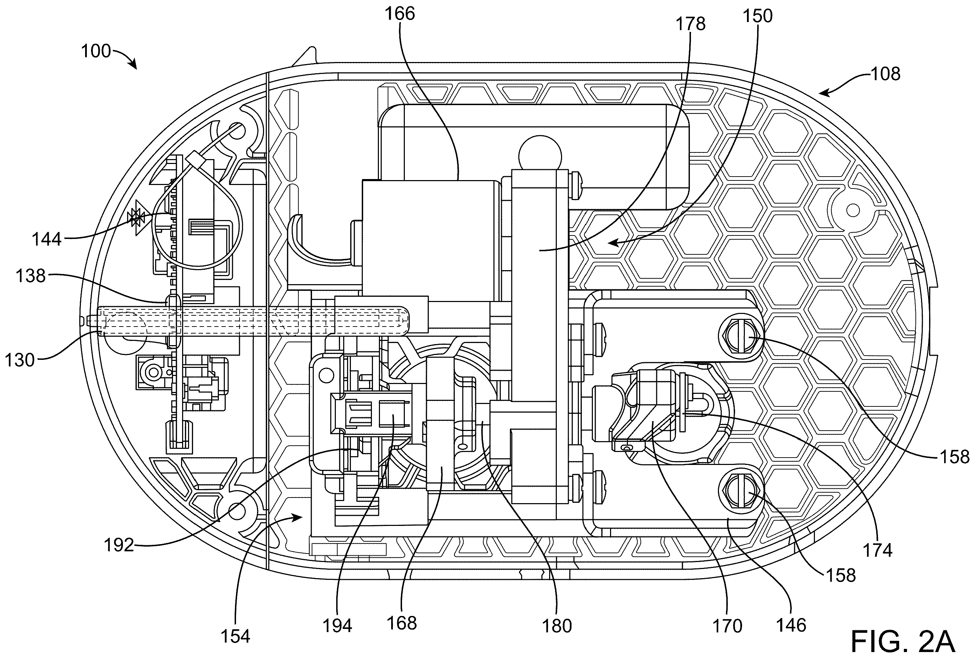

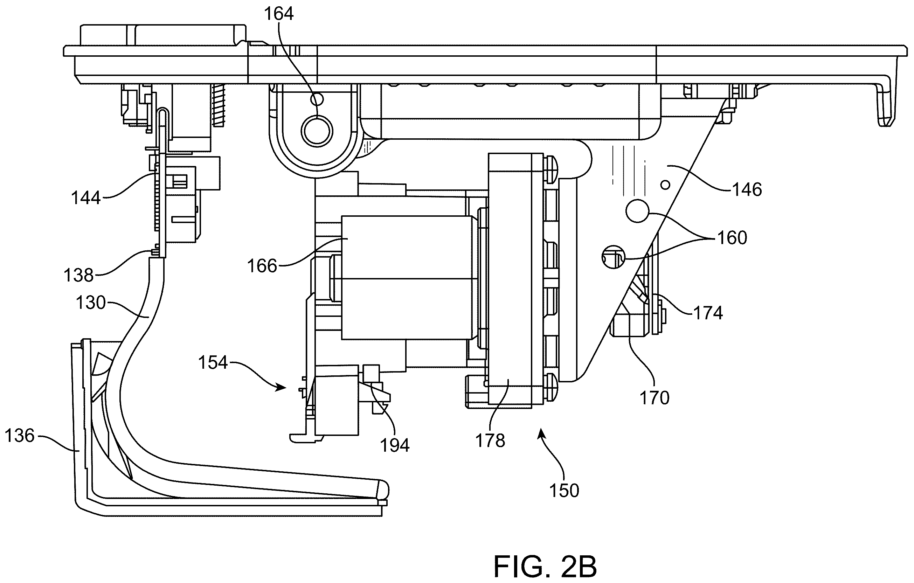

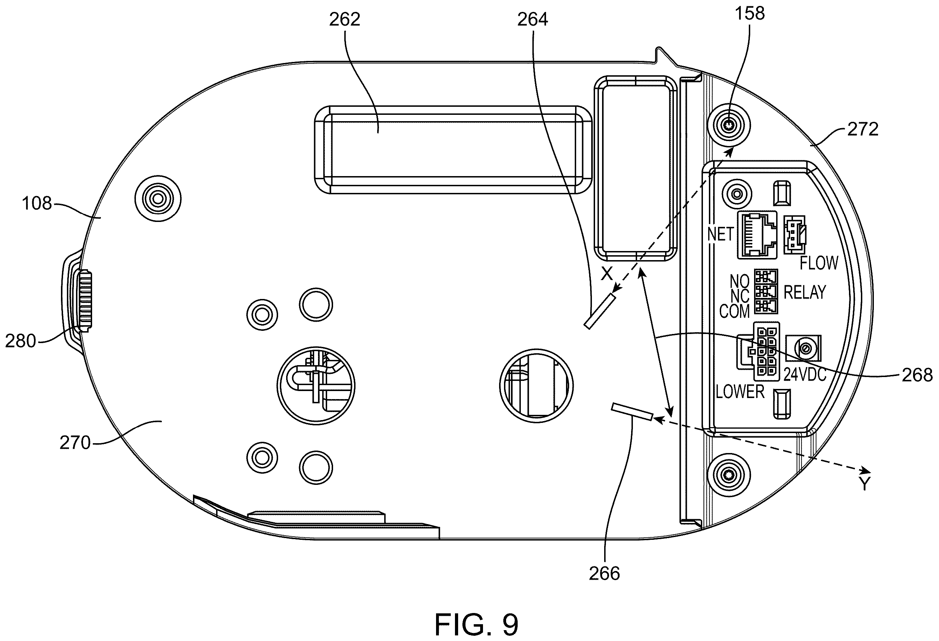

FIG. 1 illustrates a valve controller 100 configured to be coupled to a control valve in a water conditioning system, such as a water softening system. The valve controller 100 can include a housing 104 comprised of a front housing cover 106, a back housing panel 108 (see FIGS. 2A and 9), and a user interface panel 110. The back housing panel 108 can be selectively coupled to the front housing cover 106 to enclose various internal components of the valve controller 100. Further, the user interface panel 110 can also be selectively coupled to the front housing cover 106. The user interface panel 110 can include a user interface 114 and an outer rim 116. In some forms, the user interface panel 110 is co-planar with a front surface 118 of the front housing cover 106. The outer rim 116 extends around the circumference of the user interface panel 110 and may contain knurling provided in the form of ridges.

In some forms, the user interface 114 includes a color display 120 and a plurality of buttons 124. The color display 120 may include various graphics with designated widgets. The widgets may be user-discernible portions of the color display 120 that may be manipulated by using the buttons 124 to select or "press" the widgets. The widgets may be integrated to create a set of controls for the valve controller 100 and may also be integrated to display status information about the valve controller 100 and the corresponding water conditioning system. In some embodiments, the widgets may include, but are not limited to, buttons, radio buttons, checkboxes, drop-down lists, sliders, tabs, and/or any other non-textual widgets. For example, upon depressing a first widget using the buttons 124, the screen may display a water pressure value within a corresponding valve or water conditioning system.

The buttons 124 can provide one or more preprogrammed functions for the valve controller 100. For example, as shown in FIG. 1, directional buttons 124 can be provided to move a cursor (not shown) on the display 120. Undo, mode, and home screen buttons 124 may be provided to allow the user to directly control the display 120. The physical buttons 124 can also directly impact the operating state of the valve controller 100 such as by turning on/off the valve controller 100 or modulating water flow through an associated control valve. The plurality of buttons 124 located on the user interface panel 110 may be flat or protrude away from the user interface panel 110, allowing for a tactile sensation for the user.

The front housing cover 106 may additionally include a light bar 128 configured to selectively illuminate based on the status of the valve controller 100 or the status of the water conditioning system with which the valve controller 100 is being used. In some forms, the light bar 128 extends along a portion of the front surface 118 and a portion of a side surface 129 of the front housing cover 106. As shown in FIGS. 1-2C, in some forms, the light bar 128 is provided in the form of a flooding light pipe 130 located behind a narrow aperture 134 in the housing 104 of the valve controller 100. The narrow aperture 134 may be filled with a translucent or transparent material 136 to allow light to pass through the housing 104 from the flooding light pipe 130. In some embodiments, the material 136 filling the narrow aperture 134 is formed integrally with the flooding light pipe 130. In some forms, one or more LEDs 138 are positioned at a first end of the flooding light pipe 130, and the flooding light pipe 130 distributes the light produced by the LEDs 138 across the length of the flooding light pipe 130. In some embodiments, the flooding light pipe 130 may provide fiber optic lighting. In some instances, the flooding light pipe 130 may contain a diffuser such that the flooding light pipe 130 appears to the user as a continuous bar of light.

FIGS. 2A-2C illustrate a plurality of internal components of the valve controller 100 including the flooding light pipe 130, a microcontroller 144, one or more brackets 146, a mechanical drive train assembly 150, and a valve position sensing assembly 154. The microcontroller 144 may be any suitable processing device or set of processing devices, such as, but not limited to, a microprocessor, a suitable integrated circuit, a system on a chip, one or more field programmable gate arrays (FPGAs), and/or one or more application-specific integrated circuits (ASICs). The microcontroller 144 may also contain a memory, which may be volatile memory (e.g., RAM, which may include magnetic RAM, ferroelectric RAM, and any other suitable forms), non-volatile memory (e.g., disk memory, FLASH memory, EPROMs, EEPROMs, non-volatile solid-state memory, etc.), unalterable memory (e.g., EPROMs), read-only memory, and/or high-capacity storage devices (e.g., hard drives, solid state drives, etc.). The microcontroller 144 may include multiple types of memory, particularly both volatile memory and non-volatile memory. The microcontroller 144 may also be included as part of a printed circuit board (PCB). The microcontroller 144 may additionally feature an integral wireless antenna for Wi-Fi and Bluetooth^{®} transmission.

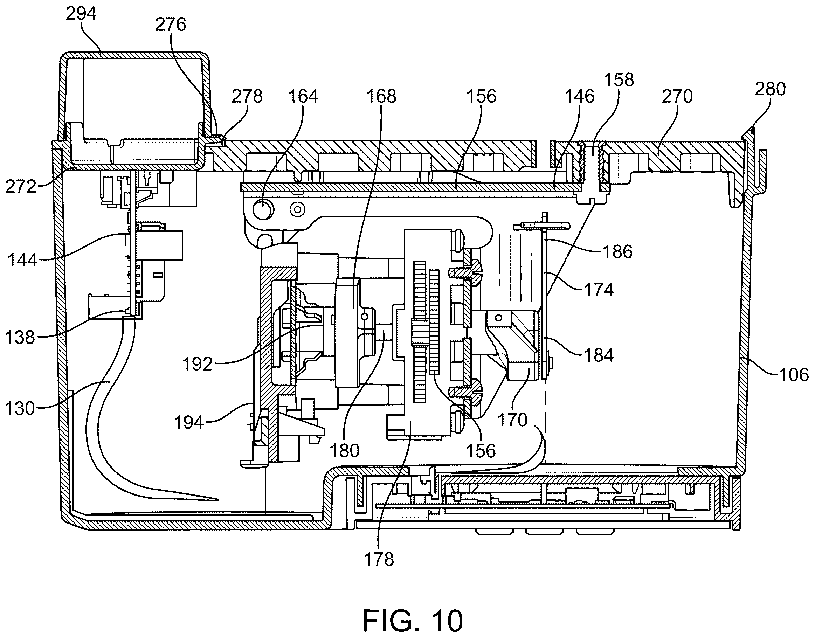

In general, the bracket 146 may serve to secure and support the other internal components of the valve controller 100, namely the mechanical drive train assembly 150 and the valve position sensing assembly 154. In some forms, the bracket 146 is directly attached to a gear train 156 (see FIG. 10) of the mechanical drive train assembly 150 and the back housing panel 108 via one or more screws 158. The bracket 146 may include one or more apertures 160 on an upper surface of the bracket 146 that are sized and shaped to receive the one or more screws 158 that attach the bracket 146 to various components of the valve controller 100. Accordingly, during maintenance, the screws 158 may be stored in the apertures 160 to prevent misplacement. In some forms, the bracket 146 may also include a hinge 164 that is attached to the back housing panel 108, and the bracket 146 may be secured to the back housing panel 108 via two screws 158. As such, when the screws 158 attaching the bracket 146 to the back housing panel 108 are removed, the bracket 146, the mechanical drive train assembly 150, and the valve position sensing assembly 154 may be pivoted away from the back housing panel 108 for ease of access. Further, the screws 158 may be stored in a corresponding aperture 160.

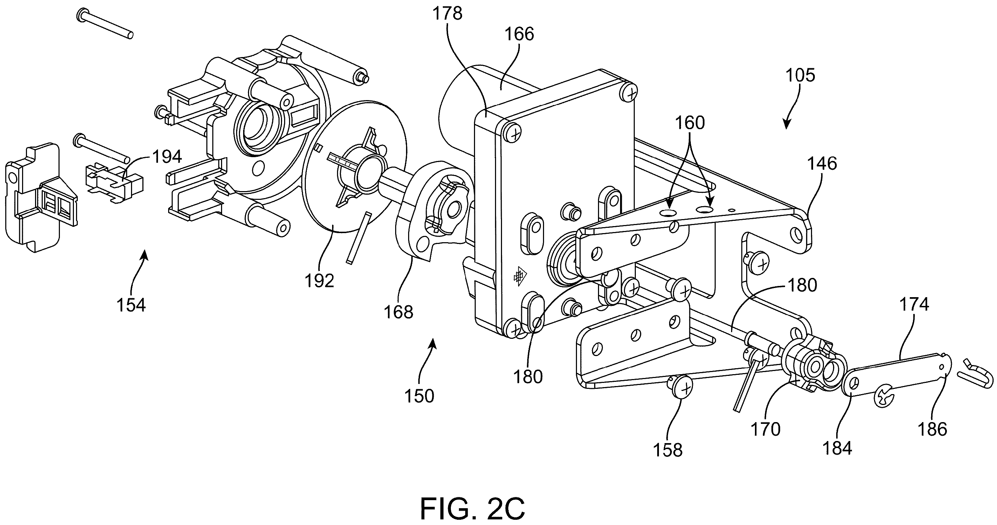

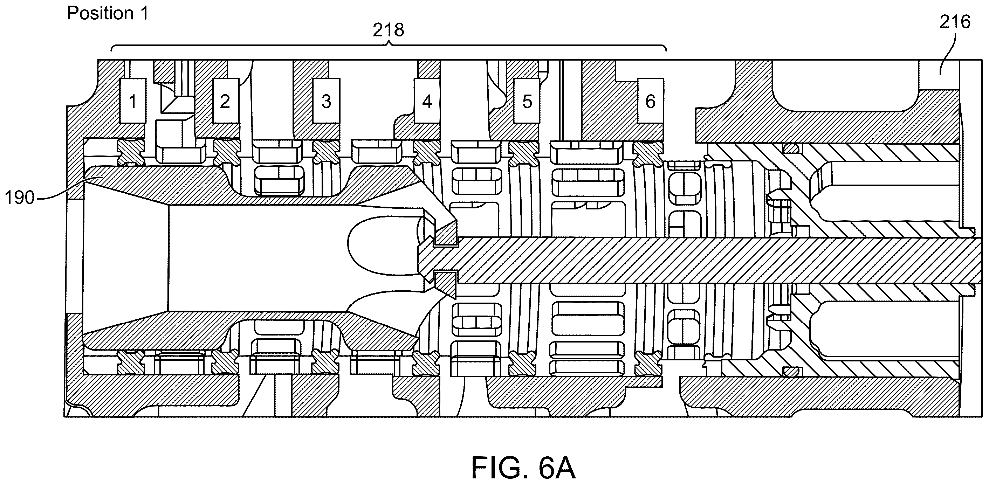

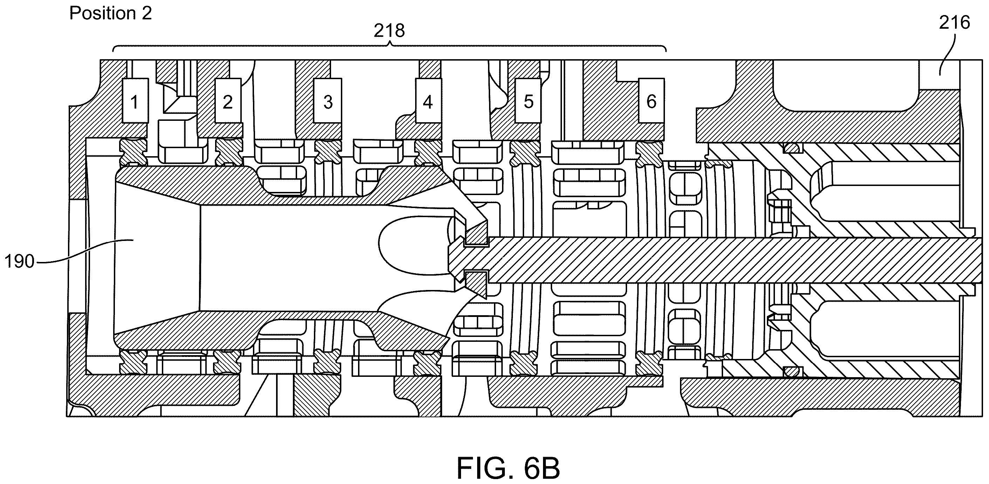

In some embodiments, the mechanical drive train assembly 150 includes a motor 166, a cam 168, a drive crank 170, the gear train 156, and a linkage 174. The mechanical drive train assembly 150 may be driven by the motor 166, which may be controlled and powered by the microcontroller 144. The motor 166 may be configured to directly drive an input shaft of the gear train 156, which may be positioned inside of a gearbox 178. An output shaft 180 of the gear train 156 may be coupled to the cam 168 and the drive crank 170, which may share a common axis of rotation. The linkage 174 may comprise a first end 184 and a second end 186 (see FIG 2C). The first end 184 may be coupled to the drive crank 170, and the second end 186 may be configured to be coupled to a control valve for a water conditioning system. Specifically, the second end 186 may be configured to be coupled to a reciprocating piston 190 (see FIGS. 6A and 6B) of the control valve that controls the flow of water through the associated water softener. In some forms, the cam 168 may be connected to a brine valve and an injector assembly for refilling a brine tank. Accordingly, activating the motor 166 may cause the drive crank 170 and the cam 168 to rotate, which may cause translational movement of the linkage 174,driving the piston 190 through the control valve (not shown) and allowing the injector assembly to refill the brine tank. In some forms, the second end 186 of the linkage 174 is coupled to a shutoff valve.

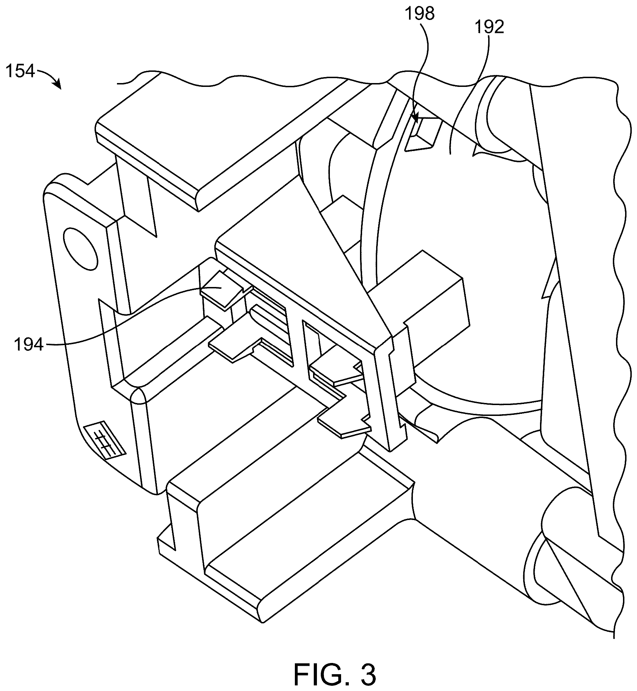

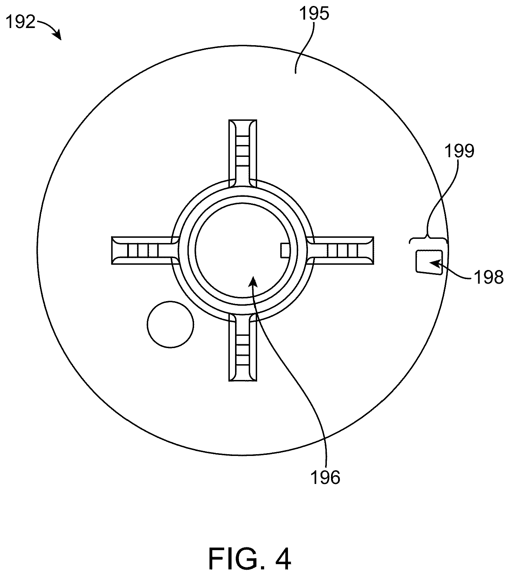

FIGS. 3 and 4 illustrate the position sensing assembly 154 and components thereof in further detail. The position sensing assembly 154 may include an encoder disc 192 and an optical sensor 194. The encoder disc 192 may be substantially flat and circular in shape and include a surface 195, a central bore 196, and an outer aperture 198. The central bore 196 may extend through the center of the encoder disc 192 and may be generally concentric with an outer circumference of the encoder disc 192. The encoder disc 192 may be coupled to the output shaft 180 of the gear train 156 such that the encoder disc 192 may be rotated in concert with the mechanical drive train assembly 150. Unlike conventional encoder discs, the encoder disc 192 may contain only a single aperture, e.g., the outer aperture 198. The outer aperture 198 may be located in a peripheral region 199 of the encoder disc 192. Although the outer aperture 198 is depicted as a quadrilateral, the outer aperture 198 may be provided in the form of numerous other geometric shapes such as a circle, trilateral, or other shapes.

During operation of the valve controller 100, the motor 166 may drive the input shaft, the gear train 156 may mechanically translate rotation of the input shaft to rotation of the output shaft 180, and the encoder disc 192 and the drive crank 170 may bedriven simultaneously by the output shaft 180. Here, the outer aperture 198 of the encoder disc 192 may define a "home" position. As the encoder disc 192 rotates, the optical sensor 194 may detect when the outer aperture 198 passes through the optical sensor 194 and may send a signal to the microcontroller 144 accordingly. The gear train 156 of the mechanical drive train assembly 150 may be configured such that the motor 166 makes multiple revolutions for every one revolution of the encoder disc 192. In some embodiments, the motor 166 may complete between 50 revolutions and 150 revolutions, or between 75 revolutions and 130 revolutions, or between 90 revolutions and 120 revolutions in order to rotate the encoder disc 192 one complete revolution. In one such embodiment, the motor 166 may complete 110 revolutions to cause one full revolution of the encoder disc 192.

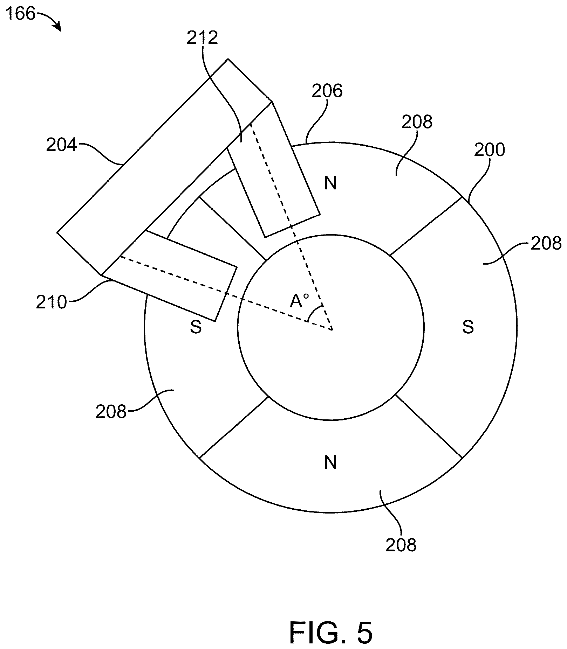

Because the encoder disc 192 includes only one outer aperture 198, the position sensing assembly 154 only provides a rotation resolution of the output shaft 180 equal to one full revolution of the encoder disc 192. However, for most control valves with which the valve controller 100 may be used, a higher position sensing resolution may be helpful for precise control of the piston 190 to which the linkage 174 is coupled. Accordingly, the valve controller 100 may incorporate quadrature encoding techniques to increase resolution, as explained below. For example, the motor 166 may include a rotor 200, a stator 202, and a rotor sensor 204. As shown in FIG. 5, the rotor 200 may include a magnet 206 with a plurality of magnetic poles 208. The rotor sensor 204 may be fixed in position and configured to detect changes in magnetic polarity as the magnetic poles 208 of the rotor 200 pass by the rotor sensor 204 during operation.

The rotor sensor 204 may be further configured to generate electric pulses corresponding to the detected changes in magnetic polarity. Thus, multiple pulses may be generated by the rotor sensor 204 for every revolution of the rotor 200. The rotor sensor 204 is in communication with the microcontroller 144 such that the rotor sensor 204 communicates the generated electric pulses to the microcontroller 144. In some embodiments, the rotor sensor 204 may include a first channel 210 and a second channel 212 that produce electric pulses that are 90 degrees offset in phase, and the rotor sensor 204 may function as a quadrature encoder. Further, the microcontroller 144 may include programming for quadrature decoding. Accordingly, based on the number of pulses received, the microcontroller 144 may determine the position of the rotor 200 with high precision, and thus, the microcontroller 144 may determine the precise position of the rotor 200, cam 168, drive crank 170, gear train 156, and linkage 174. Further, the microcontroller 144 may determine a direction in which the motor 166 is turning based on the order in which the pulses are generated from the respective channels 210, 212.

FIG. 5 illustrates one embodiment of the rotor 200 and the rotor sensor 204, wherein the rotor 200 is provided in the form of a four-pole rotor. To generate electric pulses that are 90 degrees offset in phase, the channels 210, 212 of the rotor sensor 204 may be physically offset by an angle A, which may be approximately 45 degrees. Accordingly, the turning direction of the motor 166 may be determined based on which of the first channel 210 or the second channel 212 is the leading channel. In some forms, the rotor 200 has ten poles, and thus the angle A is approximately 18 degrees (substantially halfway between each pole).

Each control valve to which the valve controller 100 can be coupled may have a series of unique positions of the piston 190 that create various intended effects on the water conditioning system in which the control valve is functioning. Accordingly, each specific control valve may define a unique number of rotations of the motor 166 for various control valve functions. Because the translational travel distance of the linkage 174 for each pulse generated by the rotor sensor 204 during motor 166 operation is known, the microcontroller 144 may be calibrated to the specific number of turns of the motor 166 required to achieve specific positions of the linkage 174 and, therefore, the specific positions of the piston 190 to which the linkage 174 is connected. Further, the microcontroller 144 may be provided with a calibrated value for the number of pulses expected per revolution of the encoder disc 192, e.g., from home position to home position. Accordingly, the home position may help to establish a benchmark with which the quadrature decoding may be calibrated to provide the microcontroller 144 with a very high level of accuracy in determining the location of the control valve piston 190.

In other words, the position sensing assembly 154 (e.g., the encoder disc 192 and optical sensor 194) and the rotor sensor 204 may work together to provide extremely precise control of the control valve. Not only may the position sensing assembly 154 and the rotor sensor 204 provide a high level of sensitivity, but they may also allow the valve controller 100 to be adapted for use with a wide array of control valves that each require minute but critical variations in the position of the piston 190 for proper functioning. Accordingly, the encoder disc 192 may essentially act as a universal encoder, and the valve controller 100 may be used with numerous control valve models without manufacturing numerous model-specific encoder discs that have apertures corresponding to certain positions of a specific control valve piston.

In some instances, the piston 190 may be moved out of position as a result of water pressure in the control valve. Because the microcontroller 144 may be programmed with a number of pulses expected to be received with respect to the reference "home" position of the encoder disc 192 for the piston 190 to be in any particular preprogrammed or calibrated position, the microcontroller 144 may also detect minute, inadvertent movements of the piston 190. For example, if the microcontroller 144 detects that the piston 190 has been inadvertently moved counterclockwise by five pulses due to a spike in water pressure, the valve controller 100 may adjust the piston 190 clockwise by five pulses in response, and vice versa, to recalibrate the piston 190 position based on the expected position of the piston. Accordingly, the quadrature encoding techniques employed by the valve controller 100 may provide not only precise positioning of the piston 190, but the valve controller 100 may also provide precise repositioning of the piston 190 to ensure proper control valve function.

In addition to precise control of the piston 190, in some applications, it may be useful to provide early detection of control valve seal wear and detection of particulates or debris in the control valve. Accordingly, the valve controller 100 may be equipped with an electrical current sensor to detect the magnitude of electrical current drawn by the motor 166 and communicate these electrical current values to the microcontroller 144. Indeed, the electrical current drawn by the motor 166 may be an indicator of the torque provided by the motor 166 during operation and an amount of force required to move the piston 190. Here, the motor 166 may draw a certain magnitude of electrical current based on the position of the piston 190 within the control valve, which may be known with precision according to the techniques described above. A cross-sectional view of an example control valve piston stack 216 of a control valve, having the piston 190 in various positions, is shown in FIGS. 6A-6F to help illustrate this concept.

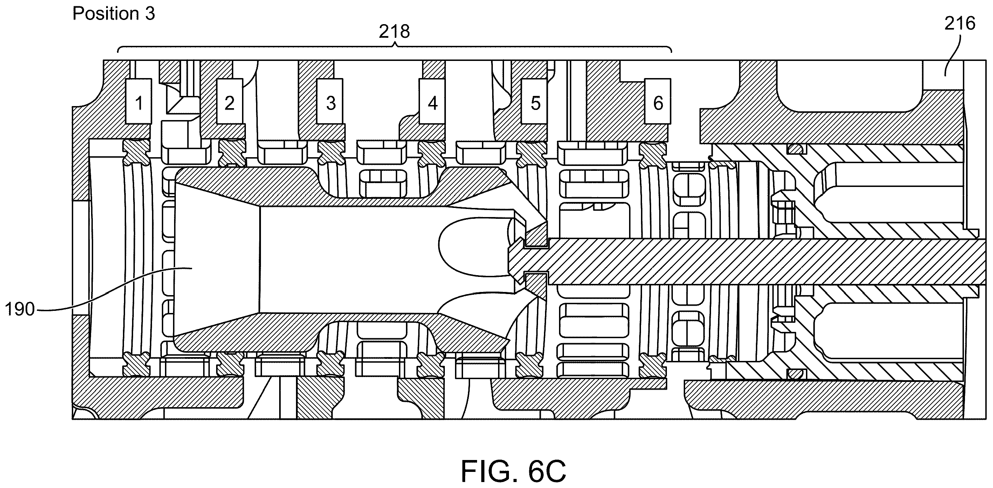

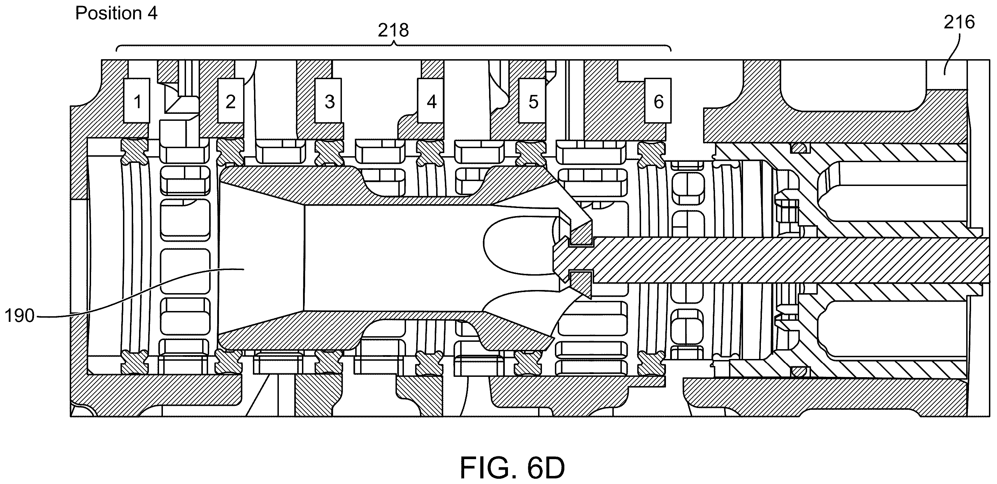

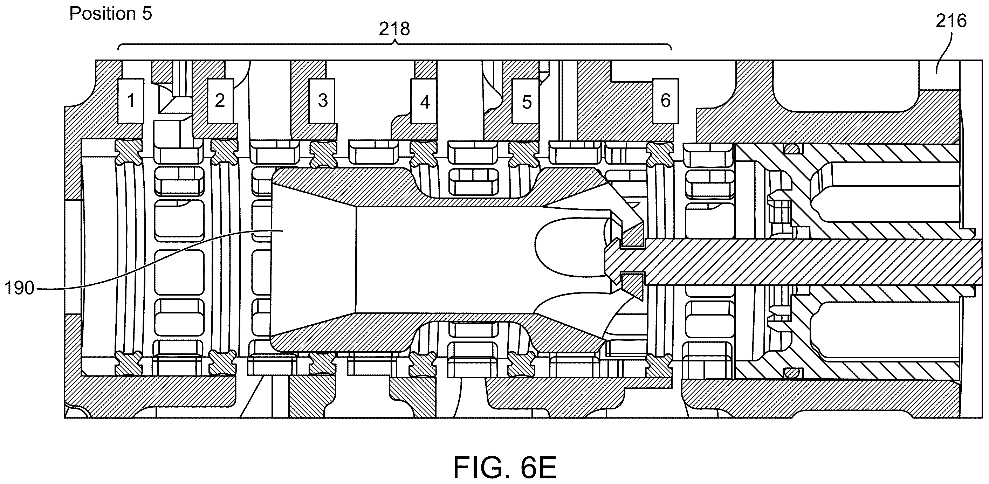

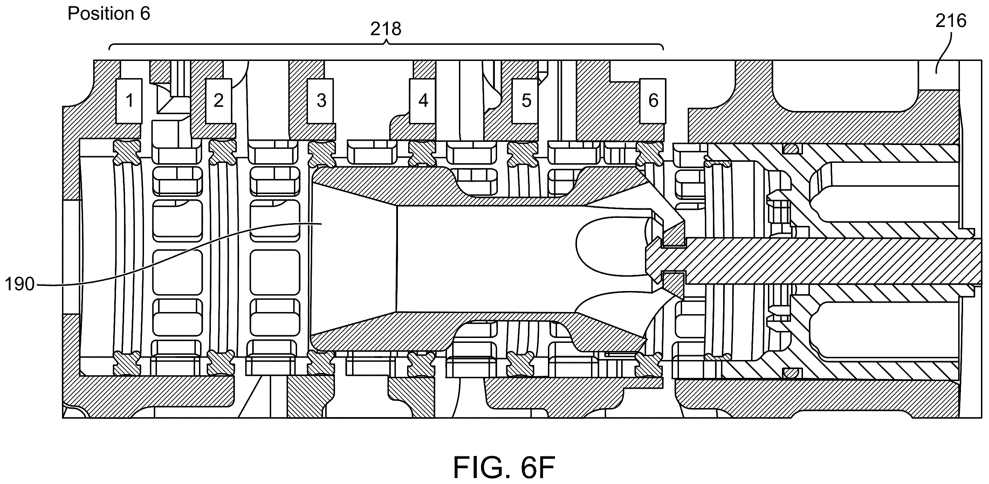

As shown in FIGS. 6A-6F, the piston 190 in the control valve piston stack 216 may selectively engage one or more seals from a set of seals 218 by way of reciprocating movement to control fluid flow through the control valve piston stack 216. The seals 218 are numbered 1-6 for positional reference. Here, FIGS. 6A-6F illustrate the piston 190 in various positions within the control valve piston stack 216 with respect to the set of seals 218. For example, FIG. 6A shows the piston 190 in Position 1, in which the piston 190 is in contact with seal 1 and seal 2 and is also initiating contact with seal 4, as can be seen by the proximity of the piston 190 to seal 4. In Position 2 (FIG. 6B), the piston 190 is in contact with seal 1, seal 2, and seal 4. In Position 3 (FIG. 6C), the piston 190 is in contact with seal 2 and is initiating contact with seal 3 and seal 5. In Position 4 (FIG. 6D), the piston 190 is in contact with seal 2, seal 3, and seal 5. In Position 5 (FIG. 6E), the piston 190 is in contact with seal 3 and is initiating contact with seal 4. In Position 6 (FIG. 6F), the piston 190 is in contact with seal 3 and seal 4 and is initiating contact with seal 6. It is to be understood that with respect to the Positions 1-6, the piston 190 is traveling left to right toward seal 6 for the purposes of illustrating the seal condition detection function. However, in use, the piston 190 may reciprocate back and forth between seal 1 and seal 6 within the valve piston stack 216.

Consequently, the motor 166 may draw different amounts of current depending on whether the piston 190 is in full contact with, initiating contact with, or not in contact with one or more of the seals 218 while the piston 190 is moved. In some embodiments, the motor 166 draws a larger amount of current when the piston 190 is initiating contact with one or more of the seals 218 than when the piston 190 is already in full contact with one or more of the seals 218. For example, in some embodiments, as the piston 190 moves through a particular position, the motor 166 may draw about 5 mA of current for each seal 218 that is in full contact with the piston and may draw about 10 mA of current for each seal 218 with which the piston 190 is initiating contact. It is understood that these current draw values are illustrative only and that the current draw values may differ substantially in practice and between control valve models.

Accordingly, when the seals 218 are new, and the control valve is in proper working condition, the electrical current drawn by the motor 166 may be measured while the piston 190 moves through various positions, such as Position 1-Position 6, to provide a calibration baseline. For example, while the piston 190 moves through Position 1 (and the seals 218 are fully intact), a first baseline motor current value may be measured. In the example of Position 1, in which the piston 190 is in contact with seal 1 (5 mA) and seal 2 (5 mA) of the set of seals, and the piston 190 is also initiating contact with seal 4 (10 mA), the first baseline motor current value may be 20 mA. In the example of Position 2, in which the piston 190 is in contact with seal 1 (5 mA), seal 2 (5 mA), and seal 4 (5 mA), a second baseline motor current value may be 15mA. In the example of Position 3, in which the piston 190 is in contact with seal 2 (5mA) and is initiating contact with seal 3 (10 mA) and seal 5 (10 mA), a third baseline motor current value may be 25 mA. This principle may carry through to the other positions of the piston 190, and it is to be understood that calibrated positional motor current values will be specific to the type of control valve, the number of seals, and the application of the valve controller, among other factors. Accordingly, the baseline motor current values corresponding to numerous positions of the piston 190 within the valve piston stack 216 may be used to determine a range of expected electrical current values that are drawn during the operation of the control valve. In some forms, the range of expected electrical current values is determined by averaging the electric current drawn by the motor 166 over a plurality of cycles with the piston 190 moving through Positions 1 through 6.

Next, the baseline motor current values may be used to generate one or more threshold values against which the measured electric current drawn by the motor 166 may be compared during normal operation. For example, the microcontroller 144 may store the baseline motor current values and generate upper current threshold values 228 and lower current threshold values 230 that are specific to each position of the piston 190. In some forms, the upper current threshold values 228 and the lower current threshold values 230 are based on an absolute value above and below the baseline motor current value for the respective position of the piston 190, such as ±5 mA. For example, for the first baseline motor current value described above (20 mA), the upper current threshold value 228 may be 25 mA and the lower current threshold value 230 may be 15 mA. In some forms, the upper current threshold values 228 and the lower current threshold values 230 are based on a percentage of the baseline motor current values above and below the baseline motor current values, respectively, such as the respective baseline motor current value ±50% of the respective baseline motor current value. For example, for the first baseline motor current value described above (20 mA), the upper current threshold value 228 may be 30 mA, and the lower current threshold value 230 may be 10 mA. In some forms, the upper current threshold values 228 and the lower current threshold values 230 are based on multiple baseline motor current values, such as the difference between the baseline motor current values, and the threshold values 228, 230 are defined as the respective baseline motor current value ±the difference value. It is to be understood that the aforementioned current threshold values are illustrative only and that the current threshold values may differ substantially in practice and between control valve models.

Once the upper current threshold values 228 and the lower current threshold values 230 are determined and stored, the microcontroller 144 may be configured to monitor the electrical current value drawn by the motor 166 for each respective monitored position of the piston 190 and compare the monitored electrical current value to the upper current threshold values 228 and the lower current threshold values 230 to determine a condition of the control valve. Further, the upper current threshold values 228 and the lower current threshold values 230 may be correlated to certain valve conditions, which are explained in more detail below.

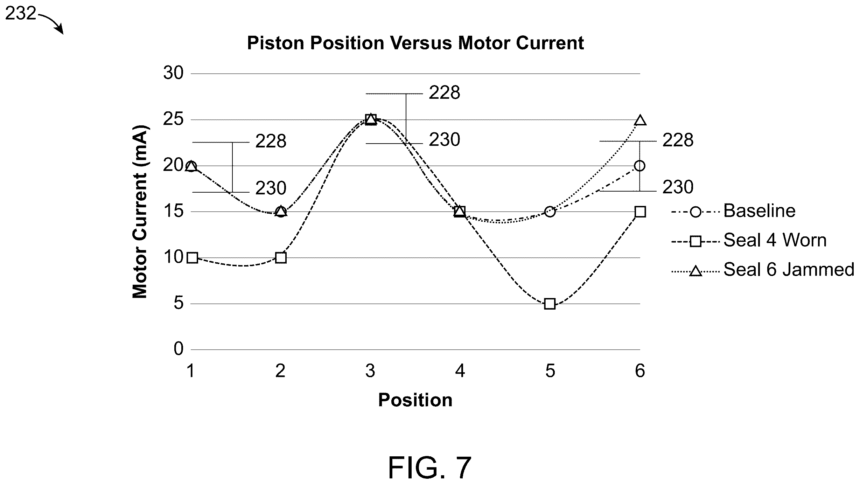

FIG. 7 illustrates a graphical representation 232 of motor current values drawn by the motor 166 at each Position 1-6 (of FIGS. 6A-6F) while the piston 190 reciprocates through the Positions 1-6. As illustrated, the graph 232 shows an example amount of motor current drawn during normal operation (baseline motor current values) in comparison to an example amount of motor current drawn when seal 4 is worn and an example amount of motor current drawn when debris is jammed on or around seal 6. As the seals 218 wear over time, the piston 190 may glide more easily through the control valve, and as a result,, the motor 166 may draw less electric current than baseline. On the contrary, if debris or particulates become wedged between the piston 190 and the seals 218, the motor 166 may draw more current than usual.

In FIG. 7, the upper current thresholds 228 are annotated for Positions 1, 3, and 6 of the piston 190 to help illustrate the seal condition detection function. As the piston 190 moves through Position 1 and Position 6, for example, the baseline motor current value may be 20mA during normal operation, the upper current threshold 228 may be about 22.5 mA, and the lower current threshold 230 may be about 17.5 mA. Accordingly, when seal 4 is worn the motor 166 only draws 10 mA at Position 1, the microcontroller 144 may determine that the motor current value is out of range at Position 1. Similarly, when debris is caught in seal 6 and the motor 166 draws 25mA when moving the piston 190 through Position 6, the microcontroller 144 may determine that the motor current value is out of range at Position 6.

When the sensed motor current value is out of range for a particular position of the piston 190, the microcontroller 144 may perform one or more response functions. For example, if the electric current falls below the lower current threshold value 230, as illustrated by the Seal 4 Worn curve at Position 1 in the graph 232, the user interface 114 may display an alert indicating that there is a system defect in the form of a worn seal and the location of the worn seal. In some forms, the alert may provide a troubleshooting guide that may indicate possible causes and solutions in response to the lower current threshold value 230 being exceeded. For example, the valve controller 100 may display a series of steps for replacing one or more of the seals 218 in the control valve that have become worn. If the electric current drawn by the motor 166 meets or exceeds the upper current threshold value 228, as shown by the Seal 6 Jammed curve at Position 6 in the graph 232, for example, the microcontroller 144 may perform one or more response functions. For example, the user interface 114 may display an alert indicating that there is a system defect in the form of debris being lodged in one or more of the seals 218 and the location of the debris. In some forms, the alert may provide a troubleshooting guide that may indicate possible causes and solutions in response to the upper current threshold value 228 being exceeded. For example, the valve controller 100 may display a series of steps for removing the piston 190 and cleaning the control valve or replacing the seals 218.

In some embodiments, motor current values are measured and compared to threshold current values for the second motor as well, wherein the second motor drives the bypass or shutoff valve (not shown). The bypass valve may contain more, fewer, or the same number of seals 218 as the control valve piston stack 216. In some embodiments, the upper current threshold values and lower current threshold values for various positions of the bypass or shutoff valve may be derived in the same way as is described above with respect to the upper current threshold values 228 and lower current threshold values 230 of the main control valve piston stack 216.

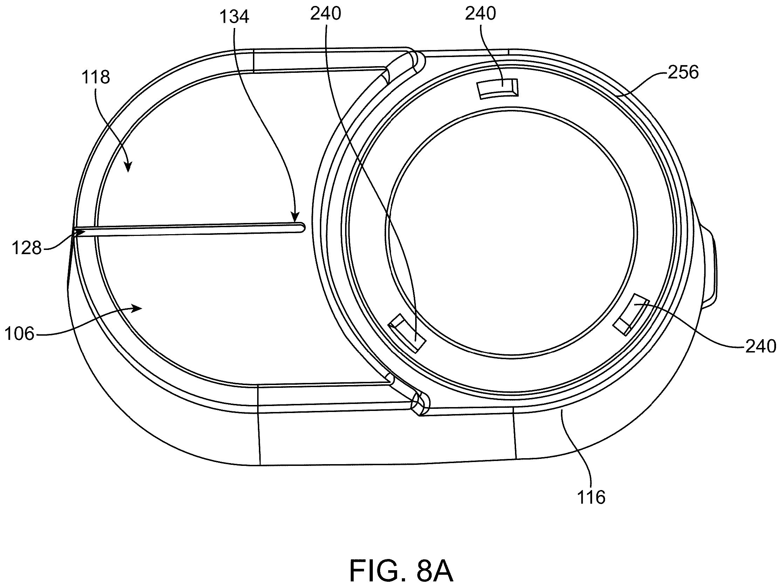

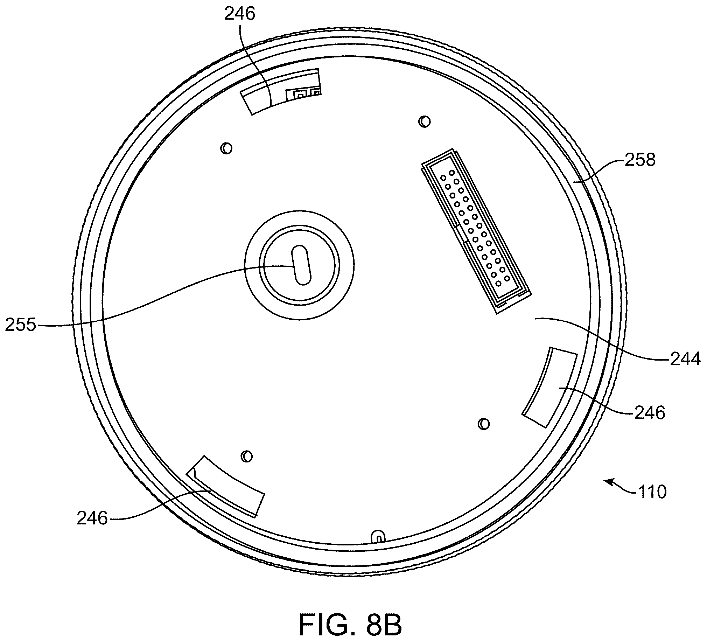

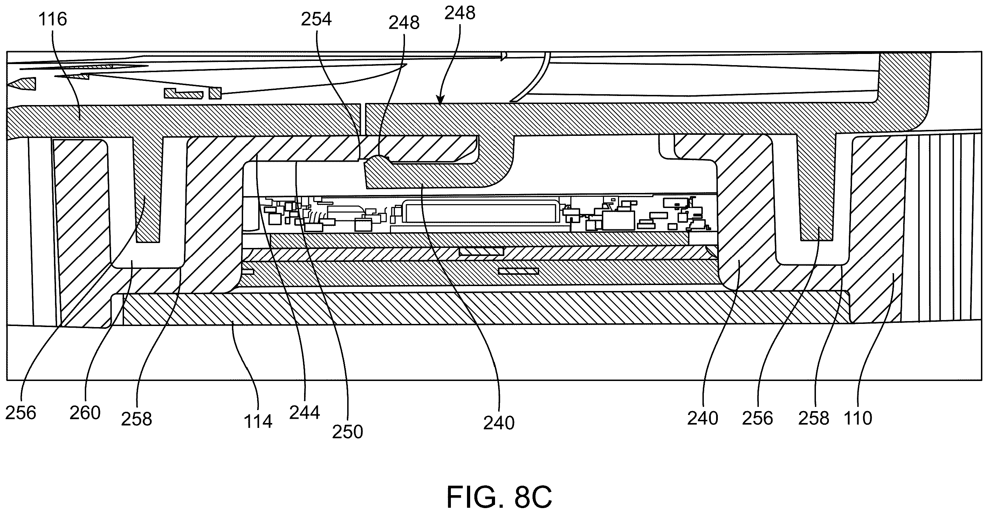

Referring next to FIGS. 8A-8C, the front housing cover 106 may include a plurality of bayonet projections 240 that selectively interlock with a back wall 244 (see FIG. 8B) of the user interface panel 110. Specifically, the back wall 244 of the user interface panel 110 may include a plurality of slots 246. Each of the plurality of slots 246 may be configured to receive a corresponding one of the plurality of bayonet projections 240. Further, the bayonet projections 240 may each include a locking protrusion 248 (see FIG. 8C) located on a distal end of the corresponding bayonet projection 240. Also, an inner surface 250 of the back wall 244 may include a plurality of recesses 254 that may each be slightly (or substantially) circumferentially offset from a corresponding one of the plurality of slots 246. Here, the user interface panel 110 may be selectively coupled to the front housing cover 106 by inserting the plurality of bayonet projections 240 into the corresponding plurality of slots 246 and rotating the user interface panel 110. As the user interface panel 110 is rotated, the locking protrusions 248 may slide along the inner surface 250 of the back wall 244 until each of the locking protrusions 248 is received within the corresponding recess 254 of the plurality of recesses 254. In this way, the user interface panel 110 may be held securely against the front housing cover 106. Further, the user interface panel 110 may be rotated in the opposite direction, with the use of some force, and selectively removed to perform maintenance.

Referring to FIG. 8B, the back wall 244 of the user interface panel 110 may further include a USB port 255. The USB port 255 may be designed to receive one or more of a USB-C connector, a micro-USB connector, a mini-USB connector, a USB-A connector, or the like, and the USB may comply with speed standards such as USB 1.x, 2.0, 3.x, or 4. The microcontroller 144 may be configured to provide a USB device format as well as a USB host format for the valve controller 100. Accordingly, a USB device may be coupled to the valve controller 100, and the valve controller 100 may also be coupled to a computer and recognized by the computer as a USB device. In this way, USB devices may be connected to the valve controller 100 in order to download data to the microcontroller 144, and the valve controller 100 may be connected to a computer to upload data to the computer without needing device-specific connectors or software. Further, because the user interface panel 110 is easily detachable, multiple user interface panels 110 from multiple valve controllers 100 may be easily removed, collected into one area, programmed in rapid succession, and/or reinstalled back at their source locations.

For example, users may input various valve parameters into a CSV file, and when a USB device with the CSV file is connected to the USB port 255, the microcontroller 144 may download and implement valve parameters. In some forms, the user interface 114 will display multiple CSV file names for user selection to program the valve controller 100. In some forms, the microprocessor is designed to access the CSV file and automatically update valve controller 100 functions without the need for direct user input. The valve controller 100 may also receive logo designs by way of a USB device to display on the user interface 114. In some embodiments, the microcontroller 144 is configured to automatically resize the logo before displaying the logo so that regardless of the logo image file size, the logo will not be improperly distorted or cropped when displayed on the user interface 114.

Further, in FIGS. 8A-8C, the front housing cover 106 may include an annular protrusion 256, and the user interface panel 110 may include an annular groove 258. When the user interface panel 110 is installed onto the front housing cover 106, the annular protrusion 256 may be received into the annular groove 258 (see FIG. 8c). In some instances, the annular protrusion 256 and the annular groove 258 may together form a serpentine path 260 that may help prevent the ingress of water between the front housing cover 106 and the user interface panel 110.

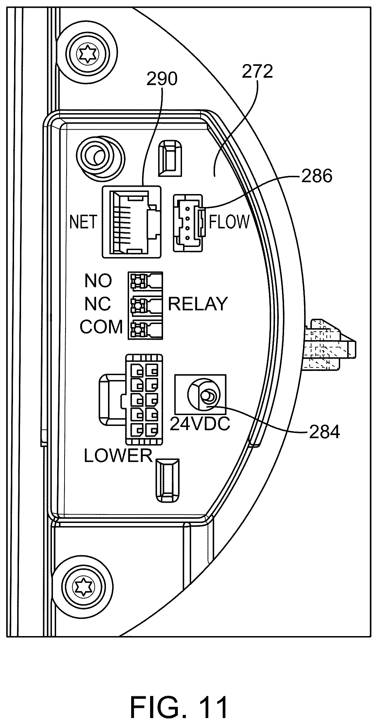

FIG. 9 illustrates the back housing panel 108 in additional detail. In some forms, the back housing panel 108 is reinforced with one or more steel plates. In some embodiments, the back housing panel 108 includes a handle 262 that is recessed into the upper portion to facilitate holding the valve controller 100. In some embodiments, the back housing panel 108 may include one or more markers 264, 266. The markers 264, 266 may be molded into the back housing panel 108 and may act as a visual guide for installing plumbing that is coupled to the control valve being operated by the valve controller 100. For example, a first marker 264 may be positioned along an axis X, and a second marker 266 may be positioned along an axis Y. The space between the axis X and the axis Y may define an interference space 268. If the pipes are positioned so that no part of the pipe falls within the interference space 268, then the pipe may not interfere with the electrical connections on the back of the valve controller 100 (see FIG. 11).

As shown in FIGS. 9 and 10, in some forms, the back housing panel 108 comprises a back panel 270 and an electronics panel 272. The electronics panel 272, which may include various external electrical connections for the valve controller 100, may be fastened to the front housing cover 106 by way of screws 158 or other mechanical couplings. The electronics panel 272 may further include a catch edge 276 (see FIG. 10) extending along an edge of the electronics panel 272 that interfaces with the back panel 270. Further, the back panel 270 may include a recessed edge 278, and the front housing cover 106 may include a cantilever latch 280. The catch edge 276 of the electronics panel 272 may be designed to catch the recessed edge 278 of the back panel 270, and the front housing cover 106 may be designed to be selectively secured to the back panel 270 by way of the latch 280. To remove the front housing cover 106 and the electronics panel 272 from the back panel 270, the latch 280 may be pulled slightly back to free one side of the front housing cover 106 to rotate the front housing cover 106 and the electronics panel 272 off of the back panel 270 in one piece, exposing the mechanical drive train assembly 150. The front housing cover 106 and the electronics panel 272 may be reinstalled by hooking the catch edge 276 over the recessed edge 278 of the back panel 270, rotating the front housing cover 106 and the electronics panel 272 back over the mechanical drive train assembly 150, and pressing the latch 280 down onto the back panel 270 until the latch 280 catches the back surface of the back panel 270.

As shown in FIG. 11, the electronics panel 272 may include a plurality of electrical connection ports. The electrical connection ports may include a power input port 284, a softener regeneration port 286, and a network connection port 290, among others. In some forms, an electronics cover 294 (see FIG. 10) is also be provided to shield the electronic connection ports and prevent the inadvertent detachment of various electronic connectors or the ingress of water.

The power input port 284 may be configured to receive a power delivery connector, such as a 24VDC connector, that delivers power to the valve controller 100 from a power supply. Further, the microcontroller 144 may include a power delivery circuit configured to control the delivery of power to certain components. For example, the motor 166 may be a first motor, and the valve controller 100 may also be configured to control a second motor (not shown) that is part of a lower drive and is configured to operate a valve, such as a bypass valve or a shutoff valve. Certain jurisdictional regulatory schemes require that the power supply for devices such as the valve controller 100 is able to deliver power to every component capable of drawing power from the power supply at the same time. Here, the power delivery circuit may be configured to selectively direct power from the power supply to only one of the first motor 166 or the second motor at a time, regardless of whether the microcontroller 144 requests power to be delivered to both the first motor 166 and the second motor simultaneously. Accordingly, the power delivery circuit may include electronic components that prevent power from being delivered to the first motor 166 when the second motor is receiving power, and vice versa.

The softener regeneration port 286 may be configured to receive a flow meter connector of a flow meter or a remote regeneration connector. The flow meter connector may deliver flow meter data or other signals to the microcontroller 144 so that the microcontroller 144 may decide when to trigger regeneration after the water softener has treated a pre-defined or user-defined volume of water. In contrast, the remote regeneration connector may provide signals from a secondary device to indicate when regeneration should be triggered. The user may select whether the flow meter or the secondary device will be the source of signals to trigger regeneration via the display. However, the microcontroller 144 may also include a regeneration circuit that detects which type of signals, e.g. flow meter signals or remote regeneration signals, are being provided to the microcontroller 144 via the softener regeneration port 286. Accordingly, in the case where the user inputs the source for the regeneration trigger incorrectly, the regeneration circuit may determine the type of signal received so that the microcontroller 144 is prepared to receive signals from the external device (flow meter or remote regeneration device) that is connected. Thus, the electronics of the microcontroller 144 that are designed to process flow meter signals will not be damaged by the remote regeneration signals, and the flow meter signals will not damage the electronics designed to process remote regeneration signals.

The valve controller 100 may also form part of a network of communicably coupled valve controllers 100. In some embodiments, the valve controllers 100 may use wireless network protocols in conjunction with wired network communications, which may be implemented via the network connection port 290. For example, non-limiting examples of wired communications may include CAT5 or USB communications. Further, non-limiting examples of wireless protocols include Wi-Fi (e.g., an 802.11x network, which may include one or more wireless routers, one or more switches, etc.), peer-to-peer (e.g., a Bluetooth network, a ZigBee ^{®} network, a Z-Wave ^{®} network, a proprietary RF connection, etc.), or cellular (e.g., a 3G network, a 4G network, etc., complying with any suitable standard, such as CDMA, GSM, LTE, LTE Advanced, WiMAX, etc.). In some embodiments, the communication network may be a LAN, a WAN, a public network (e.g., the Internet), a private or semi-private network (e.g., a corporate or university intranet), any other suitable type of network, or any suitable combination of networks.

The valve controller 100 provided herein may be applied to systems for treating, purifying, and/or filtering water as well as systems for treating, purifying, and/or filtering other fluids. The disclosed valve controller 100 and components thereof may be composed of metal or plastic material such that the material does not degrade or weaken when exposed to water. In some embodiments, the valve controller 100 and its components may be comprised of metallic alloys. In some such embodiments, the valve controller 100 and/or components of the valve controller 100 may contain markings, engravings, or embossments.

Thus, an improved valve controller is provided. In other embodiments, other configurations are possible. For example, those of skill in the art will recognize, according to the principles and concepts disclosed herein, that various combinations, sub-combinations, and substitutions of the components discussed above can provide useful benefits.

## Claims

1. A valve controller comprising:
a microcontroller;
a motor coupled to the microcontroller and including:
a rotor having a plurality of magnets, and
a rotor sensor configured to generate an electrical pulse when a magnet of the plurality of magnets passes by the rotor sensor;
a linkage having a first end and a second end, wherein the linkage is coupled to the motor by the first end and the linkage is coupled to a piston of a control valve by the second end;
an encoder disc coupled to the motor; and
an optical sensor positioned to detect an aperture along a peripheral region of the encoder disc as the encoder disc is rotated by the motor,
wherein the encoder disc comprises only a single aperture in the peripheral region, and the microcontroller determines a current position of the piston based on electrical pulses generated by the rotor sensor and the detection of the aperture in the encoder disc.

2. The valve controller of claim 1, wherein the microcontroller further determines an expected position of the piston based on the electrical pulses and the detection of the aperture in the encoder disc.

3. The valve controller of claim 2, wherein the microcontroller is further configured to instruct the valve controller to adjust a position of the piston when the current position of the piston is different from the expected position of the piston.

4. The valve controller of any one of claims 1 to 3, wherein the microcontroller is configured to detect inadvertent movement of the piston based on a number of electrical pulses generated by the rotor sensor.

5. The valve controller of any one of claims 1 to 4, further comprising an electrical current sensor configured to sense an electrical current value drawn by the motor,
wherein the control valve further comprises one or more seals and the piston selectively engages the one or more seals by way of reciprocating movement to control fluid flow through the control valve, and
the microcontroller is configured to:
monitor the electrical current value drawn by the motor,
compare the monitored electrical current value to one or more electrical current threshold values to determine a condition of the control valve.

6. The valve controller of claim 5, wherein the microcontroller determines the one or more electrical current threshold values based on one or more baseline electrical current values.

7. The valve controller of claim 6, wherein the one or more baseline electrical current values includes at least a first baseline electrical current value corresponding to a first position of the piston with respect to the one or more seals and a second baseline electrical current value corresponding to a second position of the piston with respect to the one or more seals.

8. The valve controller of claim 7, wherein the piston is in full contact with the one or more seals in the first position.

9. The valve controller of claim 7, wherein the piston is not in contact with any of the one or more seals in the second position.

10. The valve controller of claim 7, wherein the one or more electrical current threshold values includes an upper electrical current threshold value and a lower electrical current threshold value.

11. The valve controller of claim 10, wherein the upper electrical current threshold value is no more than 50% greater than the first baseline electrical current value or the second baseline electrical current value and the lower electrical current threshold value is no more than 50% less than the first baseline electrical current value or the second baseline electrical current value.

12. The valve controller of claim 5, wherein the condition of the control valve is selected from the group consisting of proper working condition, a worn seal, or jammed debris.

13. The valve controller of claim 5, wherein the microcontroller is further configured to display an alert indicating the condition of the control valve on a user interface.

14. The valve controller of any one of claims 1 to 13, further comprising:
a second motor coupled to the microcontroller, wherein the motor is a first motor and the second motor is coupled to a bypass valve or a shutoff valve;
a power supply coupled to the microcontroller; and
a power delivery circuit configured to selectively direct power from the power supply to only one of the first motor or the second motor at a time.

15. The valve controller of claim 14, wherein when the microcontroller requests power to be delivered to both the first motor and the second motor simultaneously, the power delivery circuit directs power from the power supply to only one of the first motor or the second motor at a time.
